# EUROPEAN PATENT APPLICATION

(11) **EP 3 141 501 A1**
(43) Date of publication of application: **15.03.2017**
(21) Application number: 15788976.7
(22) Date of filing: 30.04.2015
(51) Int. Cl.: B65G 47/52, B65G 13/12, B65G 21/12

(54) **LIFTING APPARATUS**

(30) Priority: 07.05.2014 JP 2014096107
(71) Applicant: Itoh Denki Co., Ltd., Kasai-shi, Hyogo 675-2302 (JP)
(72) Inventor: ITOH, Kazuo, Kasai-shi Hyogo 679-0180 (JP); NAKAMURA, Tatsuhiko, Kasai-shi Hyogo 679-0180 (JP); TAKAMI, Tomohiro, Kasai-shi Hyogo 679-0180 (JP)
(74) Representative: Sajda, Wolf E.
(86) International application number: PCT/JP2015/062990
(87) International publication number: WO 2015/170660

(57) **Abstract**

A lifting and lowering device that exhibits high conveyance efficiency with small occupation in floor space is provided. The lifting and lowering device includes lifting and lowering guides (6a, 6b, 6c, 6d), leading guides (7a, 7b, 7c, 7d), and lifting and lowering tables (8a, 8b). The lifting and lowering tables (8a, 8b) include placing tables (13). A lifting and lowering member (12) of the lifting and lowering table (8) is vertically movable along the lifting and lowering guide (6). The leading guide (7) has a curved line, and the engagement unit (52) which is engaged therewith has a degree of freedom in a lateral direction. The lifting and lowering member (12) is guided by the lifting and lowering guide (6) to move only in a vertical direction. The engagement units (52a, 52b) moves also in a lateral direction to move the placing table (13). The two lifting and lowering tables (8a, 8b) pass each other without collision.

## Description

### TECHNICAL FIELD

The present invention relates to a lifting and lowering device which moves an object in a vertical direction. The lifting and lowering device of the present invention is, for example, disposed in a three-dimensional conveyor line and used to deliver an object between upper and lower conveyors.

### BACKGROUND ART

Postal service companies or home delivery companies sort picked-up packages, cargos, and the like according to their destinations. For example, the picked-up cargos and the like are gathered at a specified sorting place, and sorted and loaded onto trucks or the like according to the destinations.

In the sorting place, conveyor lines run in all directions, and the picked-up cargos are gathered by destinations.

The conveyor lines in the sorting place include a main conveying passage which splits into a plurality of sub-conveying passages (child conveying passages), each of which further splits into a plurality of sub-conveying passages (grandchild conveying passages) or great-grandchild conveying passages.

Nowadays, the picked-up cargos are sorted in more detailed manner, and the conveyor lines are required to further increase the complexity.

Accordingly, the conveyor lines are assembled three dimensionally, and a horizontal conveying passage is provided over or below another horizontal conveying passage, and the cargos are delivered between the upper and lower horizontal conveying passages.

The lifting and lowering devices used for such purposes include, for example, a device utilizing a pantograph mechanism which lifts and lowers a lifting and lowering table.

Patent Document 1 discloses an invention to convey an object by allowing a frame-shaped carriage, which is connected to a wire rope hung around a pulley having a drive motor, to move up and down in the height direction.

### PRIOR ART DOCUMENTS

### PATENT DOCUMENTS

Patent Document 1: JP 2006-016 203 A

### DISCLOSURE OF INVENTION

### TECHNICAL PROBLEM

A lifting and lowering device conventionally includes a lower station and an upper station, and one lifting and lowering table or the like moves back and forth between the stations. Accordingly, such conventional lifting and lowering devices have a defect of bad conveyance efficiency.

In other words, to move an object from a lower conveyor to an upper conveyor, a conventional lifting and lowering device brings an object from the lower conveyor to a lower station of the lifting and lowering device. Then, the object is moved to the upper station by moving up the lifting and lowering table or the like, and the object is then delivered from the upper station to the upper conveyor.

Accordingly, when a lifting and lowering table or the like is situated at an upper station of the lifting and lowering device, the lower station does not include a lifting and lowering table or the like, and thus, the lifting and lowering device cannot carry in an object. Thus, according to the conventional lifting and lowering device, an object has to stand by in front of the lifting and lowering device until a lifting and lowering table or the like arrives.

Like a well bucket, in the case where a structure having two lifting and lowering tables that are connected with each other through a pulley is employed, one of the lifting and lowering tables is situated at a lower station, while the other one of the lifting and lowering tables is situated at an upper station. This enables an object to be introduced to the lower station, thus improving the conveyance efficiency.

However, the lifting and lowering device having a structure in which two lifting and lowering tables are connected through a pulley has a defect that a large floor area is occupied and a lot of room is required.

In view of the foregoing, an objective of the present invention is to provide a lifting and lowering device that has a high conveyance efficiency and occupies a small floor area.

### SOLUTION TO PROBLEM

In order to solve the above problems, an aspect of the present invention provides a lifting and lowering device including: a lower station; an upper station situated above the lower station; and two placing tables moving vertically between the upper station and the lower station, wherein a projection area of the upper station and a projection area of the lower station partly or entirely overlap with each other, and wherein when the two placing tables vertically move, the placing tables partly or entirely move out of the projection areas at an intermediate height position between the upper station and the lower station to allow the two placing tables to pass each other at the position.

According to this aspect, the lifting and lowering device includes two placing tables. Accordingly, when one of the placing tables is situated at the upper station, the other one of the lifting and lowering devices can be stayed at the lower station. Likewise, when one of the placing tables is situated at the lower station, the other one of the lifting and lowering devices can be stayed at the upper station. Accordingly, while an object of the upper station is ejected from the lifting and lowering device, an object can be conveyed to the placing table of the lower station.

In the lifting and lowering device according to the present invention, moving paths of the placing tables are unique when the placing tables move vertically. The placing tables partly or entirely move out of the projection areas of the upper and lower stations at an intermediate height position between the upper and the lower stations. Accordingly, the two lifting and lowering tables pass each other at an intermediate height position.

As a result, a small floor area is sufficient for the lifting and lowering device according to the present invention.

It is desirable that the lifting and lowering device further includes a leading guide member provided in a vertical direction, the leading guide member having a curved passage at an intermediate part; and a follower member engaged with the leading guide member, wherein movement of the follower member along the curved passage allows the placing table to move in a lateral direction.

The lifting and lowering device according to this aspect includes the leading guide members and the follower members. The follower members are respectively engaged with the leading guide members. Accordingly, the follower members move when the placing tables move vertically. In the lifting and lowering device according to this aspect, each of the leading guide members includes a curved passage at an intermediate part. Accordingly, when the placing tables vertically move, each of the follower members moves along the curved passage while having a horizontal component.

The horizontal component causes the placing tables to move in a lateral direction.

More desirably, the lifting and lowering device includes a lifting and lowering member movable in a vertical direction, wherein the placing table is set in the lifting and lowering member, the placing table being movable in a lateral direction with respect to the lifting and lowering member, wherein the follower member comprises a freely rotatable rotation body, wherein the lifting and lowering member and the placing table each comprise a engagement member engaging with the rotation body, and wherein the rotation body moves laterally while the follower member moves along the curved passage of the leading guide member, the rotation body being rotated due to its engagement with the engagement member on the lifting and lowering member, rotation of the rotation body causing the engagement member on the placing table to move laterally to allow the placing table to move laterally.

According to this aspect, the moving distance in a lateral direction of the placing tables can be enlarged in comparison with the horizontal component of the leading guide members.

It is desirable that the lifting and lowering device includes a lifting and lowering member movable in a vertical direction; and a lifting and lowering guide member provided in a vertical direction, wherein the placing table is set in the lifting and lowering member, the placing table being movable in a lateral direction with respect to the lifting and lowering member, and wherein the lifting and lowering member comprises a vertical pole member having a plurality of guide engagement members at different positions in height, the guide engagement member being engaged with the lifting and lowering guide member.

According to the present aspect, the lifting and lowering device includes the lifting and lowering guides that are provided in a vertical direction, and vertically moves the lifting and lowering members along the lifting and lowering guides.

According to the present aspect, the lifting and lowering member includes a vertical pole member, and a plurality of guide engagement members are provided on the vertical pole member at positions that are different in height. In the present aspect, the vertical pole member includes the plurality of guide engagement members to resist the moment applied to the lifting and lowering member.

It is desirable that the lifting and lowering device includes a lifting and lowering member movable in a vertical direction, wherein the placing table is set in the lifting and lowering member, wherein the lifting and lowering member includes a driving source and a rotation body rotated by the driving source, wherein a fixed engagement part engaged with the rotation body and extending in a vertical direction is provided, the fixed engagement part being fixed to a portion other than the lifting and lowering member, and wherein rotation of the rotation body causes the lifting and lowering member to move vertically.

As the driving source, a geared motor or a combination of a reduction gear and a motor, and the like can be employed. As a rotation body, a pinion gear, a sprocket, a toothed belt pulley, a friction wheel, and the like can be employed. As a fixed engagement part, a rack, a chain, a toothed belt, a rail, and the like can be employed.

According to the present aspect, the placing tables can be moved smoothly in a vertical direction.

It is desirable that the lifting and lowering device includes a lifting and lowering member movable in a vertical direction, the lifting and lowering member including a pair of side walls that move vertically holding a substantially horizontal attitude, wherein the placing table includes an area for placing an object, the placing table configured to take either of a state in which 70 % or more of the area for placing an object is accommodated in an area surrounded by the pair of side walls, and a state in which the area for placing an object largely protrudes from the area surrounded by the pair of side walls.

According to an aspect, the placing tables protrude from the lifting and lowering member respectively in a cantilever state.

It is desirable that the lifting and lowering device includes two lifting and lowering members movable in a vertical direction, wherein each of the two placing tables is set in one of the two lifting and lowering members, the two placing tables being movable in a protruding direction and in a lateral direction with respect to the lifting and lowering members, wherein the two lifting and lowering members are situated in such a manner that each of the lifting and lowering members partly is located in an overlapping area where the projection area of the upper station and the projection area of the lower station overlap with each other, whereas projection domains of the two lifting and lowering members do not overlap with each other, and wherein the two lifting and lowering members move in a vertical direction to allow each of the placing tables to be drawn in a lifting and lowering table at an intermediate height position and to allow the placing tables to protrude with respect to the lifting and lowering members at either of the upper station and the lower station.

According to the present aspect, the two placing tables can pass each other without collision.

It is desirable that the lifting and lowering device includes a lifting and lowering member movable in a vertical direction, wherein the placing table is set in the lifting and lowering member, the placing table being movable in a lateral direction with respect to the lifting and lowering members, wherein the lifting and lowering member includes a pair of side walls that move vertically holding a substantially horizontal attitude, and wherein when a lifting and lowering table is situated at the upper station or the lower station and an external conveyor is provided in a part of an area surrounded by the pair of side walls, the placing table leaves the area in which the conveyor is provided.

According to the present aspect, an object can be smoothly conveyed between the lifting and lowering member and an external conveyor.

It is desirable that the lifting and lowering device includes a pair of leading guide members that are vertically provided on a plane; a pair of lifting and lowering guide members that are provided outside of the leading guide members; and two lifting and lowering members linearly movable in a vertical direction along either one of the lifting and lowering guide members, wherein the placing tables receive force from the leading guide members to move in a lateral direction.

In the lifting and lowering device, it is desirable that the placing tables are electrically and/or mechanically controlled in such a manner that when one of the placing tables is situated at the upper station or the lower station, the other of the placing tables is situated at the lower station, and when one of the placing tables is situated between the upper station and the lower station, the other of the placing tables is also situated between the upper station and the lower station.

It is desirable that the lifting and lowering device includes a leading guide member vertically provided and having a horizontal component; a follower member engaged with the leading guide member; and a moving amount amplifying mechanism that moves the placing table in a lateral direction at the amplified moving amounts from the moving amounts of the follower member.

The moving amount amplifying mechanism may be a combination of the rotation body that freely rotates and the engagement members provided on the lifting and lowering member and the placing table, as described above.

In the lifting and lowering device, it is desirable that when the placing tables vertically move, the placing tables partly move out of the projection areas at a position where the height of the placing tables coincide with each other, to allow the placing tables to pass each other by temporarily moving away from the overlapping area where the projection area of the upper station and the projection area of the lower station overlap with each other.

According to the present aspect, the two placing tables can pass each other without collision.

In the lifting and lowering device, it is desirable that when the placing tables vertically move, one of the placing tables entirely leaves the projection areas at an intermediate height position between the upper station and the lower station to allow the two placing tables to pass each other.

According to the present embodiment, the two placing tables can pass each other in a vertical direction without collision.

### EFFECT OF INVENTION

The lifting and lowering device according to the present invention includes an upper station and a lower station, and an object can be carried onto a placing table of one of the stations, while another object is carried out from the lifting and lowering device at the other one of the stations. Accordingly, the lifting and lowering device according to the present invention has a high conveyance efficiency.

According to the present invention, the lifting and lowering device vertically moves the placing tables to pass each other, and thus occupies a small floor area.

### BRIEF DESCRIPTION OF DRAWINGS

- FIG. 1: is a perspective view of a lifting and lowering device according to an embodiment of the present invention.
- FIG. 2: is a perspective view of a conveyance system including the lifting and lowering device of FIG. 1.
- FIG. 3: is an exploded perspective view of the lifting and lowering device of FIG. 1.
- FIG. 4: is an enlarged view of leading guides and lifting and lowering guides of the lifting and lowering device of FIG. 1.
- FIGS. 5A and 5B: are a plan view and a front view of a placing table of the lifting and lowering device of FIG. 1 respectively, and illustrate a state in which the placing table is accommodated in a lifting and lowering member.
- FIGS. 6A and 6B: are a plan view and a front view of the placing table of the lifting and lowering device of FIG. 1 respectively, and illustrate a state in which an end of the placing table protrudes from the lifting and lowering member in a longitudinal direction.
- FIG. 7: is an exploded perspective view of a lifting and lowering table of the lifting and lowering device of FIG. 1.
- FIG. 8: is a partial perspective view illustrating a relationship among the lifting and lowering table, the leading guide, and the lifting and lowering guides of FIG. 1.
- FIGS. 9A and 9B: are a plan view and a front view illustrating a relationship among a lifting and lowering table on the right side, the leading guide, and the lifting and lowering guide when the lifting and lowering table is situated at an upper station.
- FIGS. 10A and 10B: are a plan view and a front view illustrating a relationship among the lifting and lowering table on the right side, the leading guide, and the lifting and lowering guide when the lifting and lowering table is situated at an intermediate height.
- FIGS. 11A and 11 B: are a plan view and a front view illustrating a relationship among the lifting and lowering table on the right side, the leading guide, and the lifting and lowering guide when the lifting and lowering table is situated at a lower station.
- FIGS. 12A and 12B: are a plan view and a front view illustrating a relationship among a lifting and lowering table on the left side, the leading guide, and the lifting and lowering guide when the lifting and lowering table is situated at the upper station.
- FIGS. 13A and 13B: are a plan view and a front view illustrating a relationship among the lifting and lowering table on the left side, the leading guide, and the lifting and lowering guide when the lifting and lowering table is situated at an intermediate height.
- FIGS. 14A and 14B: are a plan view and a front view illustrating a relationship among the lifting and lowering table on the left side, the leading guide, and the lifting and lowering guide when the lifting and lowering table is situated at the lower station.
- FIG. 15: is a view illustrating a relationship among a rack on the side of a lifting and lowering frame, a pinion, and a rack on the side of the lifting and lowering table when the height of the lifting and lowering table on the right side changes.
- FIG. 16: is a view illustrating a relationship between the right lifting and lowering table, and the left lifting and lowering table when the lifting and lowering table on the left side is situated at the upper station and the lifting and lowering table on the right side is situated at the lower station.
- FIG. 17: is a view illustrating a relationship between the right lifting and lowering table, and the left lifting and lowering table when the both lifting and lowering tables are positioned at an intermediate position.
- FIG. 18: is a view illustrating a relationship between the right lifting and lowering table and left lifting and lowering table when the lifting and lowering table on the right side is situated at the upper station and the lifting and lowering table on the left side is situated at the lower station.

### BEST MODE FOR CARRYING OUT THE INVENTION

An embodiment of the present invention is described below.

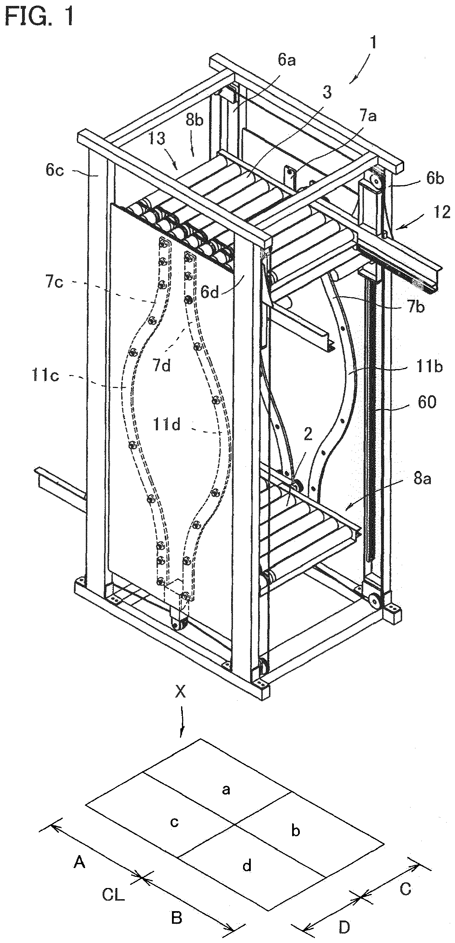

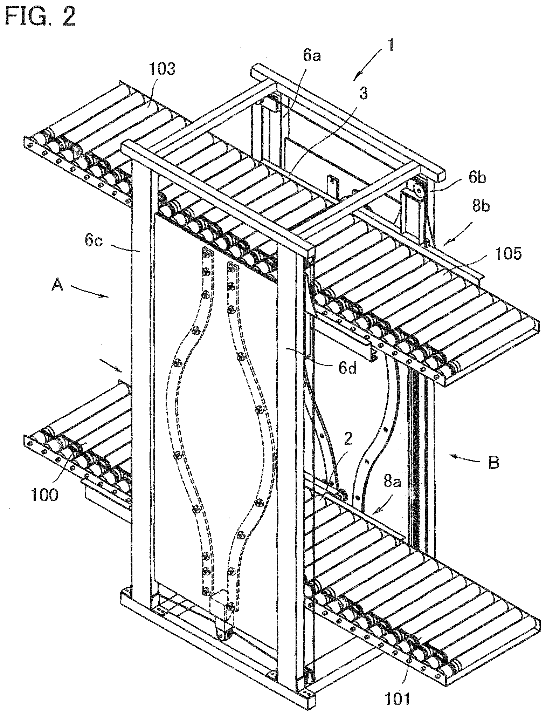

The shape of a lifting and lowering device 1 of the embodiment is shown in FIG. 1. Referring to FIG. 2, the lifting and lowering device 1 according to the embodiment is employed as a part of a conveyance system 5 which includes upper and lower linear horizontal conveyors 100, 101, 103, 105.

Referring to FIGS. 1, 2, and 3, the lifting and lowering device 1 includes four lifting and lowering guides 6a, 6b, 6c, 6d, four leading guide 7a, 7b, 7c, 7d, and two lifting and lowering tables 8a, 8b. The lifting and lowering tables 8a, 8b each include a placing table 13 for placing an object.

The lifting and lowering device 1 is a device for delivering an object from the lower linear horizontal conveyor 100 to the upper linear horizontal conveyor 105, and includes a lower station 2 and an upper station 3.

Referring to FIGS. 1 and 2, the upper station 3 is situated directly above the lower station 2, thus plane areas of the upper station 3 and the lower station 2 overlapping with each other.

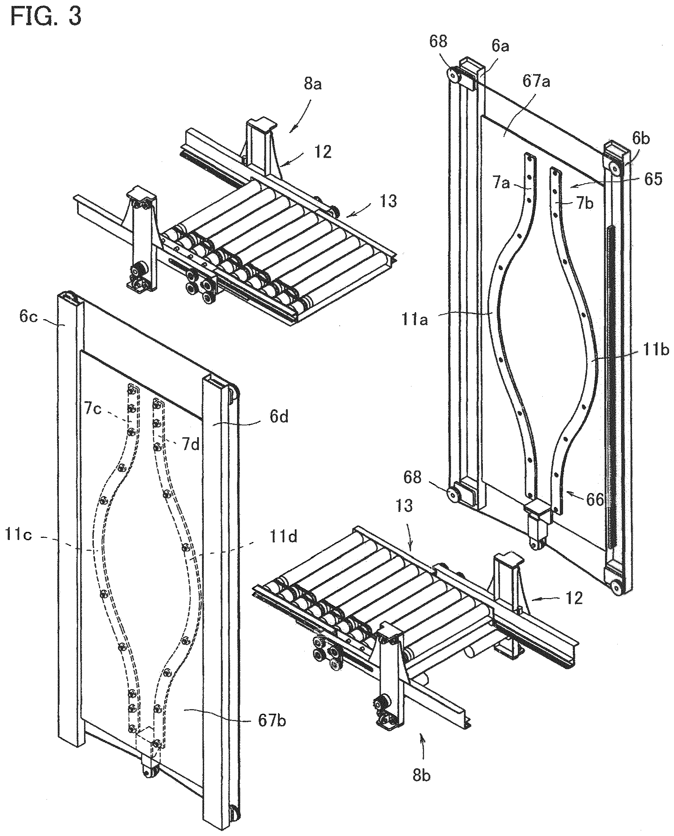

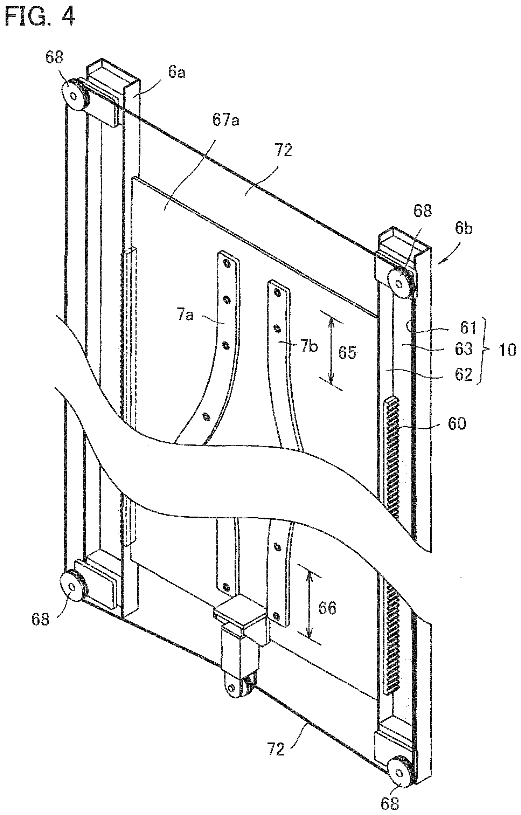

Referring to FIGS. 3 and 4, the lifting and lowering guides 6 are linear members each having a U-shaped cross section. Specifically, each of the lifting and lowering guides 6 includes a guide groove 10 on one surface.

The guide groove 10 of each of the lifting and lowering guides 6 includes right and left side walls 61, 62, and a back wall 63, and one of the side walls includes a rack 60. The rack 60 is considerably long and extends from a vicinity of the lower station 2 to a vicinity of the upper station 3.

The rack 60 extends in a vertical direction, and functions as a fixed engagement part.

Each of the lifting and lowering guides 6 includes pulleys 68 on the upper and lower ends thereof.

Each of the leading guides 7 is a band-shaped member, and the width thereof is constant at any position. Referring to FIG. 3, each of the leading guides 7 has a curved part. Specifically, each of the leading guides 7 has a rectangular cross section, and the front shape is curved as shown in FIG. 3. More specifically, each of the leading guides 7 includes linear parts 65, 66 at both ends and a curved passage 11 at the center part.

Each of the leading guides 7 has the curved passage 11, thus including a horizontal component.

Referring to FIG. 3, two leading guides 7 are arranged in a vertical attitude, and the curved passages 11 of the adjacent ones of the leading guides 7 are bulging outward away from each other.

Each of the leading guides 7 is arranged in a vertical attitude, thus including a vertical component. Each of the leading guides 7 has the curved passage 11, thus including a horizontal component.

The leading guides 7 in FIG. 3 are tentatively named a left back leading guide 7a, a right back leading guide 7b, a left front leading guide 7c, and a right front leading guide 7d.

Referring to FIGS. 1,3, and 4, each of the leading guides 7 are arranged in vertical attitudes. The left back leading guide 7a and the right back leading guide 7b are screwed to a mounting plate 67a and are arranged to form a plane. The left front leading guide 7c and the right front leading guide 7d are screwed to a mounting plate 67b and are arranged to form a plane.

As described above, the left back leading guide 7a and the right back leading guide 7b form a plane (see FIG. 3) when they are set in the lifting and lowering device 1.

The left back leading guide 7a and the right back leading guide 7b, illustrated in the back side in the figure, are arranged in such a manner that their curved passages 11 a, 11b are bulging outward.

The left front leading guide 7c and the right front leading guide 7d, illustrated in the front side in the figure, are arranged in such a manner that their curved passages 11c, 11d are bulging outward.

Then, the lifting and lowering tables 8a, 8b are described below. Referring to FIG. 3, the lifting and lowering table 8b on the right side in the figure and the lifting and lowering table 8a on the left side in the figure have substantially the same structure except that the right and left sides are inverted. Accordingly, the structure of the lifting and lowering table 8b on the right side (lower right) in the figure is described as a representative of the lifting and lowering tables.

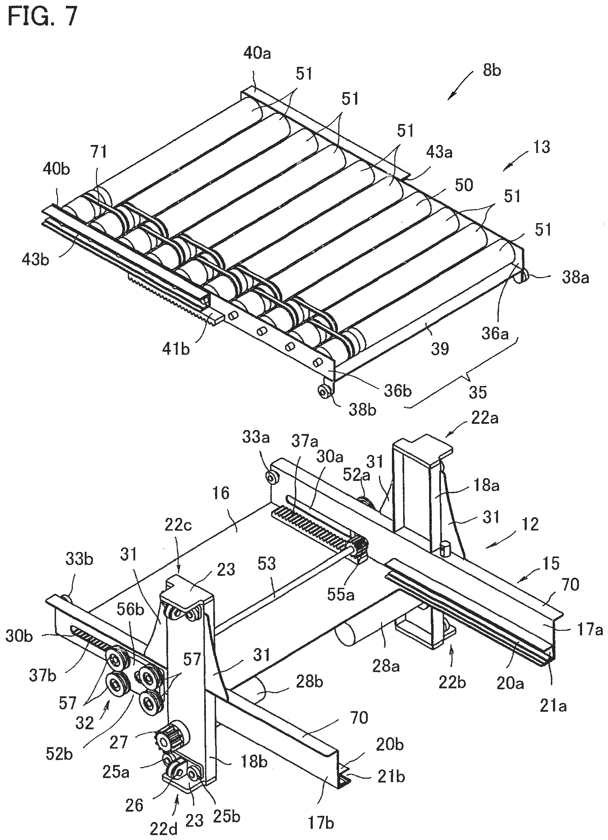

Referring to FIG. 7, the lifting and lowering table 8b includes a lifting and lowering member 12 and a placing table 13. The lifting and lowering table 8b also includes follower members 32.

Referring to FIG. 7, the lifting and lowering member 12 includes a main body 15, and vertical pole members 18a, 18b.

The main body 15 of the lifting and lowering member 12 is formed by bending a metal plate, and includes opposite side walls 17a, 17b, and a base plate 16 that joins the side walls 17a, 17b.

The side walls 17a, 17b are opposite and parallel to each other, and each includes a reinforcement rib 70 on the upper side thereof. The side walls 17a, 17b are opposite with a distance larger than the width of each of the linear horizontal conveyors 100, 101, 103, 105.

The base plate 16 partly joints the side walls 17a, 17b, and is not provided in the half area on the right side in the figure. Accordingly, the half area of the lifting and lowering member 12 is in the shape of a frame, and includes only the side walls 17a, 17b, thus forming an opening 42.

The opening 42 is an area into which a part of the linear horizontal conveyor 105 is inserted, and the placing table 13 leaves the area of the opening 42 when the lifting and lowering table is situated at the upper or the lower station, as described later.

The side walls 17a, 17b respectively include slits 30a, 30b each of which penetrates the front and back surfaces of either of the side walls17a, 17b. The slits 30a, 30b are positioned near to one end of the side walls 17a, 17b, and extend in the longitudinal direction of the side walls 17a, 17b.

Short rollers 33a, 33b and guide rails 20a, 20b are provided on the inside (plane surface side) of the side walls 17a, 17b, respectively.

The short rollers 33a, 33b are positioned on one end side in the longitudinal direction of the side walls 17a, 7b. More specifically, the short rollers 33a, 33b are positioned on the opposite side of the opening 42. The short rollers 33a, 33b are positioned on the upper side in the height direction of the side walls 17a, 7b, respectively.

The cross sections of the guide rails 20a, 20b are in the shape of a recess, and the guide rails 20a, 20b have guide grooves 21a, 21b, respectively.

The guide rails 20a, 20b extend from the middle of the side walls 17a, 17b respectively to the other end thereof. More specifically, the guide rails 20a, 20b are positioned on the side of the opening 42.

The guide rails 20a, 20b are positioned on the lower side in the height direction of the side walls 17a, 17b, respectively.

The base plate 16 of the lifting and lowering member 12 includes lifting-and-lowering-table-racks 37a, 37b. The lifting-and-lowering-table-racks 37a, 37b are positioned near the side walls 17a, 7b, respectively, and disposed in the longitudinal direction of the side walls 17a, 7b with their toothed surfaces facing upward.

The lifting-and-lowering-table-racks 37a, 37b are also positioned near the slits 30a, 30b provided on the side walls 17a, 7b, respectively.

The vertical pole members 18a, 18b are attached to the outside of the side walls 17a, 17b, respectively. The vertical pole members 18a, 18b are oriented in a direction to cross the side walls 17a, 17b at 90°. Accordingly, the lifting and lowering member 12 is in a cross shape as viewed from the side surface (see FIG. 7).

Each of the vertical pole members 18a, 18b includes a reinforcement rib 31 on either side thereof to resist the moment, and one side of the reinforcement rib 31 is welded to the main body of corresponding one of the vertical pole members 18a, 18b.

Each of the vertical pole members 18a, 18b includes one of guide engagement units (guide engagement members) 22a, 22b, 22c, 22d at either of the upper and lower ends of the outer surface. The vertical pole members 18a, 18b respectively includes geared motors 28a, 28b mounted thereon, and the geared motors 28a, 28b respectively include driving pinions 27 attached thereto.

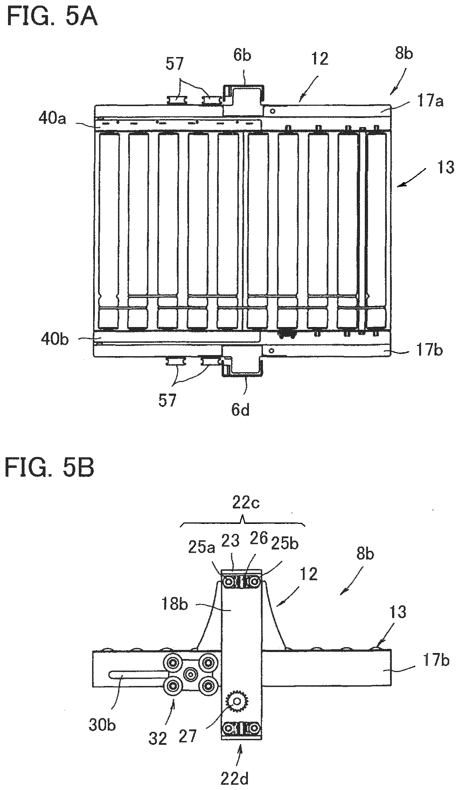

Referring to FIGS. 5B, 7, and 8, each of the guide engagement units 22a, 22b, 22c, 22d of the vertical pole members 18a, 18b is formed by combining an insertion plate 23, two lateral guide short rollers 25a, 25b, and a vertical guide short roller 26.

The insertion plate 23 is provided at either end of each of the vertical pole members 18a, 18b in a direction perpendicular to the vertical pole members 18a, 18b. The insertion plate 23 is partly inserted to the guide groove 10 of each of the lifting and lowering guides 6, and has a shape of "T" as shown in the figures.

The lateral guide short rollers 25a, 25b are attached to the outer surface of either of the vertical pole members 18a, 18b, and are tangent to side surfaces of the vertical pole members 18a, 18b. The rotational shaft of each of the lateral guide short rollers 25a, 25b is perpendicular to the plane of the vertical pole members 18a, 18b.

The vertical guide short roller 26 is attached to the outer surface of either of the vertical pole members 18a, 18b, and has a horizontal rotation shaft.

The inner surfaces of the vertical pole members 18a, 18b respectively include the geared motors 28a, 28b. The rotation shafts of the geared motors 28a, 28b respectively penetrate the vertical pole members 18a, 18b, and protrude on to the outer surfaces of the vertical pole members 18a, 18b. The rotation shafts respectively include driving pinions 27 attached thereto.

Then, the placing table 13 of the lifting and lowering table 8b is described below. Referring to FIG. 7, the placing table 13 is a small conveyor, and is formed of a laterally-extending frame 35 including a motor-incorporating roller 50 and follower rollers 51 mounted thereon. The laterally-extending frame 35 includes short rollers 38a, 38b, guide rails 40a, 40b, and placing-table-racks 41a, 41b mounted thereon.

The laterally-extending frame 35 is formed by bending a metal plate, and includes opposite side walls 36a, 36b, and a base plate 39 that joins the side walls 36a, 36b. The entire length of the laterally-extending frame 35 is substantially equal to that of the lifting and lowering member 12.

The width of the laterally-extending frame 35 is narrower than that of the lifting and lowering member 12.

The motor-incorporating roller 50 and the follower rollers 51 are mounted between the opposite side walls 36a, 36b.

The motor-incorporating roller 50 is internally equipped with a motor (not shown) and a reduction gear (not shown) inside the roller body, and the roller body rotates by energizing the internal motor.

The follower rollers 51 are rollers that rotate freely.

A belt 71 is wound around between the motor-incorporating roller 50 and the follower rollers 51, and between the follower rollers 51. When the motor-incorporating roller 50 rotates, the follower rollers 51 rotate accordingly.

Each of the side walls 36a, 36b of the laterally-extending frame 35 includes on the outer side thereof, one of the short rollers 38a, 38b, one of the guide rails 40a, 40b, and one of the placing-table-racks 41a, 41b.

The short rollers 38a, 38b attached to the laterally-extending frame 35 of the placing table 13 are configured to engage with the guide rails 20a, 20b of the lifting and lowering member 12, respectively. The guide rails 40a, 40b attached to the laterally-extending frame 35 of the placing table 13 are configured to engage with the short rollers 33a, 33b of the lifting and lowering member 12, respectively.

Specifically, the short rollers 38a, 38b attached to the placing table 13 are configured to engage with the guide rails 20a, 20b of the lifting and lowering member 12, respectively, and the short rollers 38a, 38b attached to the placing table 13 are situated at positions corresponding to the guide rails 20a, 20b of the lifting and lowering member 12, respectively.

On the other hand, the guide rails 40a, 40b of the placing table 13 are configured to engage with the short rollers 33a, 33b of the lifting and lowering member 12 respectively, and the guide rails 40a, 40b attached to the placing table 13 are positioned at positions corresponding to the short rollers 33a, 33b of the lifting and lowering member 12 respectively.

Accordingly, the positional relationship between the short rollers 38a, 38b and the guide rails 40a, 40b of the placing table 13 are opposite to the positional relationship between the short rollers 33a, 33b and the guide rails 20a, 20b of the lifting and lowering member 12.

The guide rails 40a, 40b of the placing table 13 extend from the middle of the side walls 36a, 36b respectively to one end thereof. The guide rails 40a, 40b of the placing table 13 are positioned on the upper side in the height direction of the side walls 36a, 36b respectively.

The cross sections of the guide rails 40a, 40b provided on the laterally-extending frame 35 of the placing table 13 are in the shape of a recess, and the guide rails 40a, 40b have guide grooves 43a, 43b, respectively.

The short rollers 38a, 38b attached to the laterally-extending frame 35 of the placing table 13 are situated at one end of the side walls 36a, 36b respectively. The short rollers 38a, 38b are situated lower than the side walls 36a, 36b, respectively.

The placing-table-racks 41a, 41b are further provided near the side walls 36a, 36b of the placing table 13, respectively.

The placing-table-racks 41a, 41b are disposed in the longitudinal direction of the side walls 36a, 36b, respectively with their toothed surfaces facing downward.

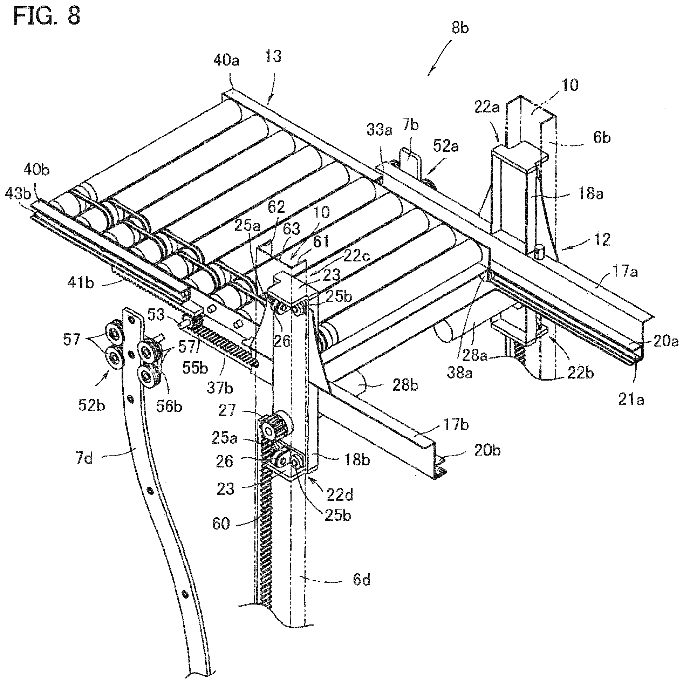

Referring to FIGS. 7 and 8, the follower member 32 includes engagement units 52a, 52b, a shaft 53, and pinions 55a, 55b.

The engagement units 52a, 52b are configured to engage with the leading guides 7a, 7c, respectively, and each of the engagement units 52a, 52b is formed of a base plate 56 and four short rollers 57 attached to the base plate 56. Each of the short rollers 57 has a flange, and the outer periphery thereof is in the shape of a groove.

The rotation shafts of the four short rollers 57 are perpendicular to either of the base plates 56a, 56b, and rotatably attached to the outer surface of either of the base plates 56a, 56b.

The shaft 53 joins two engagement units 52a, 52b, and both ends of the shaft 53 are respectively attached to the engagement units 52a, 52b through bearings not shown.

The shaft 53 includes the pinions 55a, 55b attached thereto. As described above, the shaft 53 is attached to the engagement units 52a, 52b through the bearings not shown, and thus the two pinions 55a, 55b are rotatable relative to the two engagement units 52a, 52b, respectively. In other words, the two pinions 55a, 55b are freely rotatable rotation bodies.

On the other hand, the two pinions 55a, 55b cannot move relative to the two engagement units 52a, 52b. Specifically, when the engagement unit 52a moves in a lateral direction, the two pinions 55a, 55b also move in a lateral direction.

Then, a relationship between the members of the lifting and lowering table 8b is described. As described above, the lifting and lowering table 8b includes the lifting and lowering member 12, the placing table 13, and the follower member 32. The placing table 13 is fitted into the lifting and lowering member 12.

Specifically, the width of the placing table 13 is narrower than that of the lifting and lowering member 12, and the placing table 13 is fitted into a recessed part formed by the side walls 17a, 17b and the base plate 16 of the lifting and lowering member 12.

The short rollers 38a, 38b attached to outside of the laterally-extending frame 35 of the placing table 13 are respectively engaged with the guide grooves 21a, 21b of the guide rails 20a, 20b provided inside of the side walls 17a, 7b of the lifting and lowering member 12.

The guide grooves 43a, 43b of the guide rails 40a, 40b attached to outside of the laterally-extending frame 35 of the placing table 13 are respectively engaged with the short rollers 33a, 33b provided inside of the lifting and lowering member 12.

Accordingly, the laterally-extending frame 35 of the placing table 13 is movable in a horizontal direction relative to the lifting and lowering member 12 of the lifting and lowering table 8b. The length of each of the guide rails 40a, 40b of the placing table 13 and the length of each of the guide rails 20a, 20b of the lifting and lowering member 12 are about half of the entire length of the placing table 13 and the lifting and lowering member 12. In addition, the short rollers 38a, 38b of the placing table 13 and the short rollers 33a, 33b of the lifting and lowering member 12 are situated at ends of the placing table 13 and the lifting and lowering member 12 in the longitudinal direction.

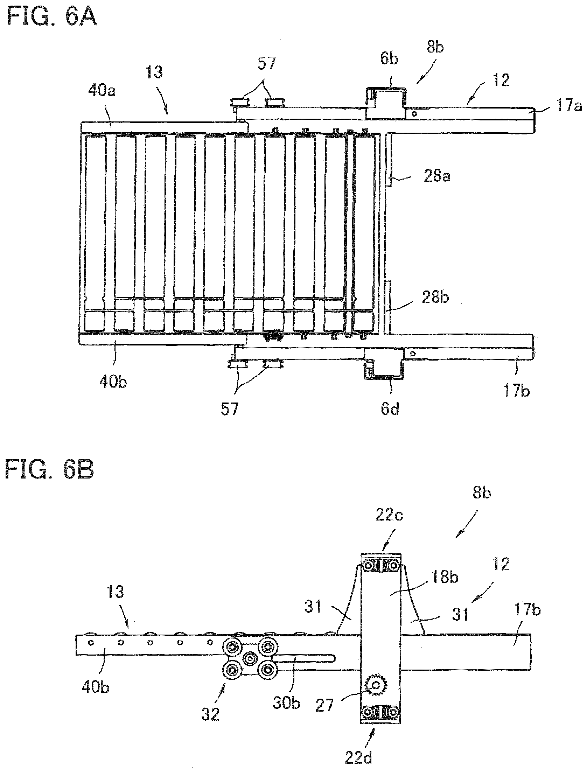

Accordingly, the placing table 13 can be shifted from a state in which the placing table 13 is accommodated between the side walls 17a, 17b of the lifting and lowering member 12 as shown in FIGS. 5A and 5B to a state in which a half-length of an end (left side in the figure) of the placing table 13 protrudes leftward from the lifting and lowering member 12 as shown in FIGS. 6A and 6B. In other words, the placing table 13 is allowed to smoothly move in a lateral direction by engagement of the short rollers 38a, 38b thereof with the guide rails 20a, 20b of the lifting and lowering member 12 and engagement of the guide rails 40a, 40b thereof with the short rollers 33a, 33b of the lifting and lowering member 12.

According to the present embodiment, when the placing table 13 is accommodated between the side walls 17a, 17b of the lifting and lowering member 12, most part of the placing table 13 is accommodated between the side walls 17a, 17b, but there is no limitation in the accommodated amount. It is preferable that an area equal to or more than 70 % of the placing table 13 is accommodated between the side walls 17a, 17b of the lifting and lowering member 12.

Referring to FIGS. 6A and 6B, even when the end (left side in the figure) of the placing table 13 protrudes leftward from the lifting and lowering member 12, the engagement between the short rollers 38a, 38b provided on the laterally-extending frame 35 of the placing table 13 and the guide rails 20a, 20b of the lifting and lowering member 12 is maintained. The engagement between the guide rails 40a, 40b provided on the laterally-extending frame 35 of the placing table 13 and the short rollers 33a, 33b of the lifting and lowering member 12 is also maintained.

Since the short rollers of one of the placing table 13 and the lifting and lowering member 12 are engaged with the guide rails of the other of the placing table 13 and the lifting and lowering member 12, the placing table 13 and the lifting and lowering member 12 are prevented from being vertically separated at the engagement parts. The engagement points between the placing table 13 side and the lifting and lowering member 12 are separately provided at two positions each in the longitudinal direction of the placing table 13 side and the lifting and lowering member 12.

Accordingly, even when the end (left side in the figure) of the placing table 13 protrudes from the lifting and lowering member 12, both side surfaces of the placing table 13 are held at positions separated in the longitudinal direction, and the positions are prevented from being vertically separated, thus the horizontal attitude of the placing table 13 is maintained.

Referring to FIG. 8, when the placing table 13 is fitted into the lifting and lowering member 12, the placing-table-racks 41a, 41b and the lifting-and-lowering-table-racks 37a, 37b are opposite to each other. Specifically, the toothed surfaces of the placing-table-racks 41a, 41b are faced downward, while the toothed surfaces of the lifting-and-lowering-table-racks 37a, 37b are faced upward, and thus the toothed surfaces of both of the racks are vertically opposite to each other.

The pinions (rotation bodies) 55a, 55b of the follower member 32 are engaged with both of the placing-table-racks 41a, 41b and the lifting-and-lowering-table-racks 37a, 37b, respectively.

Specifically, the shaft 53 of the follower member 32 penetrates the slits 30 of the lifting and lowering member 12, and the freely rotatable pinions 55a, 55b are disposed between the side walls 17a, 17b of the lifting and lowering member 12. The pinion 55a is engaged with both of the placing-table-rack 41a and the lifting-and-lowering-table-rack 37a, which is opposite to the placing-table-rack 41a. The other pinion 55b is engaged with both of the placing-table-rack 41b and the lifting-and-lowering-table-rack 37b, which is opposite to the placing-table-rack 41b.

Although the structure of the lifting and lowering table 8b on the right side (lower right side) in FIG. 3 is described above, the structure is substantially the same as that of the lifting and lowering table 8b on the left side (upper left side) in FIG. 3. Note that the lifting and lowering table 8b on the left side in the figure and the lifting and lowering table 8b on the right side in the figure are mirror images of each other.

While the placing table 13 of the lifting and lowering table 8b on the right side protrudes leftward from the lifting and lowering member 12 as shown in FIGS. 6A and 6B, the placing table 13 of the lifting and lowering table 8b on the left side in the figure protrudes in the opposite direction.

Then, a relationship among the lifting and lowering guides 6a, 6b, 6c, 6d, the leading guides 7a, 7b, 7c, 7d, and the lifting and lowering tables 8a, 8b is described below.

For the purpose of illustration only, an object is conveyed from the side of the linear horizontal conveyor 100 as shown by the arrow. The side of the linear horizontal conveyors 100, 103 of the lifting and lowering device 1 is referred to as an introduction area A, and the side of the linear horizontal conveyors 101, 105 of the lifting and lowering device 1 is referred to as an ejection area B.

More specifically, assuming that a rectangular projection area X (see FIG. 1) surrounded by the four lifting and lowering guides 6a, 6b, 6c, 6d set in the vertical attitudes is provided, an area nearer to the linear horizontal conveyor 101 in comparison with the center line CL of the area X is referred to as an introduction area A. An area nearer to the linear horizontal conveyor 103 in comparison with the center line CL of the area X is referred to as an ejection area B.

In the present embodiment, both of the lower station 2 and the upper station 3 are located in the projection area X. Specifically, the lower station 2 is a spatial area in the projection area X and also having the same height as the linear horizontal conveyors 100, 101 disposed on the lower side. The upper station 3 is a spatial area in the projection area X and also having the same height as the linear horizontal conveyors 103, 105 disposed on the upper side.

For the purpose of illustration only, on the basis of the attitude illustrated in FIG. 1, an area on the back side in the width direction is referred to as a back area C, and an area on the front side in the figure is referred to as a front area D.

Referring to FIG. 1, the lifting and lowering device 1 is planarly divided into four areas, the back side of the introduction area A is referred to as a back side introduction area a, for example. In the same manner, the other areas are referred to as a back side ejection area b, a front side introduction area c, and a front side ejection area d (see FIG. 1).

A positional relationship between the lifting and lowering guides 6a, 6b, 6c, 6d and the leading guides 7a, 7b, 7c, 7d is described below.

According to the present embodiment, the linear lifting and lowering guides 6a, 6b and curved leading guides 7a, 7b are situated in the back area C of the lifting and lowering device 1. The linear lifting and lowering guides 6c, 6d and the curved leading guides 7c, 7d are situated in the front area D of the lifting and lowering device 1.

The leading guides 7a, 7b in the back area C are vertically arranged in the middle in a conveyance direction of an object, and the lifting and lowering guides 6a, 6b are vertically arranged on both sides of the leading guides 7a, 7b. The same is applied to the front area D, the leading guides 7c, 7d are vertically arranged in the middle, and the lifting and lowering guides 6c, 6d are vertically arranged on both sides of the leading guides 7c, 7d.

As described above, the left back leading guide 7a and the right back leading guide 7b in the back area C are arranged in such a manner that the curved passages 11 a, 11b are bulging outward. Specifically, the curved passage 11a of the left back leading guide 7a disposed in the front introduction area a is bulging toward the adjacent lifting and lowering guide 6a.

On the other hand, the curved passage 11b of the right back leading guide 7b disposed in the back side ejection area b is bulging toward the adjacent lifting and lowering guide 6b.

The same is applied to the front area D, the left front leading guide 7c and the right front leading guide 7d are arranged in such a manner that the curved passages 11c, 11d are bulging toward the adjacent lifting and lowering guides 6c, 6d, respectively. Specifically, the curved passages 11c, 11d are disposed to be bulging outward.

The guides provided in the back area C are positioned to face the guides provided in the front area D.

Specifically, the lifting and lowering guides 6c, 6d are disposed in the front area D at positions opposite to the lifting and lowering guides 6a, 6b provided in the back area C, and the leading guides 7a, 7b are disposed in the front area D at positions opposite to the leading guides 7a, 7b provided in the back area C.

In relation to the planarly divided four areas of the lifting and lowering device 1, each of the four areas includes one of the lifting and lowering guides 6 and one of the leading guides 7.

Specifically, the back side introduction area a includes the lifting and lowering guide 6a and the leading guide 7a, the back side ejection area b includes the lifting and lowering guide 6b and the leading guide 7b, the front side introduction area c includes the lifting and lowering guide 6c and the leading guide 7c, and the front side ejection area d includes the lifting and lowering guide 6d and the leading guide 7d.

One of the lifting and lowering tables (lifting and lowering table on the left side) 8a is engaged with the guides 6a, 6c, 7a, 7c disposed in the introduction area A (back side introduction area a and front side introduction area c). The lifting and lowering table 8a is not engaged with the guides disposed in the ejection area B.

The other one of the lifting and lowering tables (lifting and lowering table on the right side) 8b is engaged with the guides 6b, 6d, 7b, 7d disposed in the ejection area B (back side ejection area b and front side ejection area d). The lifting and lowering table 8b is not engaged with the guides disposed in the introduction area A.

Specifically, the lifting and lowering table (lifting and lowering table on the left side) 8a is engaged with the lifting and lowering guide 6a in the back side introduction area a, the lifting and lowering guide 6c in the front side introduction area c, the leading guide 7a in the back side introduction area a, and the leading guide 7c in the front side introduction area c. In other words, the lifting and lowering table (lifting and lowering table on the left side) 8a is engaged with a pair of lifting and lowering guides 6a, 6c in the back and front areas and a pair of leading guides 7a, 7c in the back and front areas, and is not engaged with the other guides.

The lifting and lowering table (lifting and lowering table on the right side) 8b is engaged with the lifting and lowering guide 6b in the back side ejection area b, the lifting and lowering guide 6d in the front side ejection area d, the leading guide 7b in the back side ejection area b, and the leading guide 7d in the front side ejection area d.

In other words, the lifting and lowering table (lifting and lowering table on the right side) 8b is engaged with a pair of lifting and lowering guides 6b, 6c in the back and front areas, and a pair of leading guides 7c, 7d in the back and front areas, and is not engaged with the other guides.

The engagement between the lifting and lowering table (lifting and lowering table on the right side) 8b and the guides is described below with reference to FIG. 8. The guide engagement units (guide engagement members) 22a, 22b, 22c, 22d of the vertical pole members 18a, 18b provided on the main body 15 are engaged with the pair of lifting and lowering guides 6b, 6d in back and front areas.

More specifically, the vertical pole member 18a provided on one of the side walls 17a of the main body 15 of the lifting and lowering table (lifting and lowering table on the right side) 8b includes two guide engagement units 22a, 22b at upper and lower two positions.

Referring to FIG. 8, the insertion plate 23 of the upper guide engagement unit 22c is inserted into the guide groove 10 of the lifting and lowering guide 6d, and the two lateral guide short rollers 25a, 25b are respectively engaged with the side walls 61, 62 of the guide groove 10. The vertical guide short roller 26 of the guide engagement unit 22a is engaged with the back wall 63 of the guide groove 10.

Likewise, the insertion plate 23 of the lower guide engagement unit 22d is inserted into the guide groove 10 of the lifting and lowering guide 6d, and the two lateral guide short rollers 25a, 25b are engaged with the inner side surfaces of the guide groove 10. The vertical guide short roller 26 of the guide engagement unit 22d is engaged with the back surface of the guide groove 10.

Referring to FIG. 8, the driving pinion 27 provided on the vertical pole member 18b is engaged with the rack 60. As described above, the driving pinion 27 is attached to the geared motor 28b.

The same is applied to the vertical pole member 18a provided on the other side wall 17a of the lifting-and-lowering-table-rack 37, the engagement unit 22a, 22b are provided at upper and lower two positions, and the insertion plate 23 thereof is inserted into the guide groove 10 of the lifting and lowering guide 6b, and the two lateral guide short rollers 25a, 25b are engaged with the inner side surfaces of the guide groove 10, and the vertical guide short roller 26 is engaged with the back surface of the guide groove 10.

The engagement units 52a, 52b provided on the lifting and lowering table (lifting and lowering table on the right side) 8b are respectively engaged with the pair of leading guides 7b, 7d in the back and front areas.

More specifically, one of the side walls 17b of the lifting and lowering table (lifting and lowering table on the right side) 8b includes the engagement unit 52b (see FIGS. 7 and 8).

Referring to FIG. 8, four short rollers 57 provided on the base plate 56b of the engagement unit 52b are engaged with the side surface of the leading guide 7d. In other words, two short rollers 57 among the four short rollers 57 are engaged with one of the side surfaces of the leading guide 7d. More specifically, circular grooves provided on the two short rollers 57 are engaged with one of the side surfaces of the leading guide 7d (see FIG. 8).

The other two short rollers 57 are engaged with the other one of the side surfaces of the leading guide 7d.

The other lifting and lowering table (lifting and lowering table on the left side) 8a is engaged with the lifting and lowering guide 6a, the lifting and lowering guide 6c, the leading guide 7a, and the leading guide 7c that are provided in the introduction area A.

The lifting and lowering table (lifting and lowering table on the left side) 8a is engaged with the guides in the same manner as the lifting and lowering table (lifting and lowering table on the right side) 8b.

The lifting and lowering table (lifting and lowering table on the left side) 8a and the lifting and lowering table (lifting and lowering table on the right side) 8b are joined at the upper side and the lower side by two wires 72, the wires 72 are engaged with the pulleys 68 provided on the upper and lower ends of the lifting and lowering guide 6. The joined parts among the wires 72, the lifting and lowering table (lifting and lowering table on the left side) 8a, and the lifting and lowering table (lifting and lowering table on the right side) 8b is not shown in the figures.

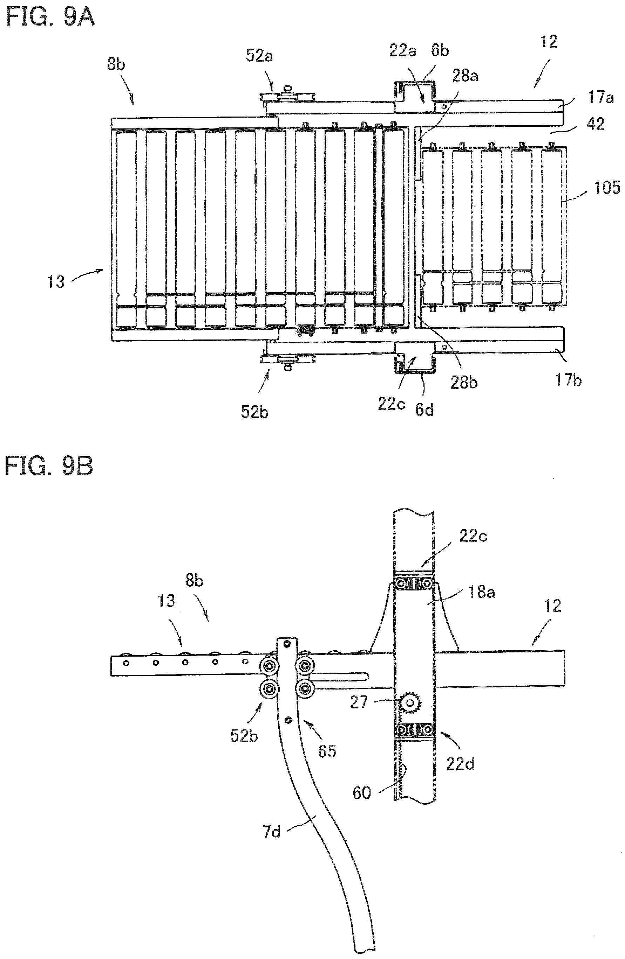

Then, the operation of the lifting and lowering device 1, especially the operation of the lifting and lowering tables 8a, 8b is described below with reference to FIGS. 9 to 15.

The operation of the lifting and lowering tables 8a, 8b is roughly explained. The lifting and lowering member 12 of each of the lifting and lowering tables 8a, 8b moves only in a vertical direction, and during the vertical movement of the lifting and lowering member 12, the placing table 13 is ejected from the lifting and lowering member 12 and moves in a horizontal direction.

The placing table 13 of the lifting and lowering table 8b on the left side can be ejected only toward the right side of the lifting and lowering member 12, and the placing table 13 of the lifting and lowering table 8a on the right side can be ejected only toward the left side of the lifting and lowering member 12. In other words, the placing table 13 of either of the lifting and lowering tables 8 a, 8b can be ejected only in a direction toward the center of the lifting and lowering device 1.

When the layout of the two lifting and lowering members 12 are planarly viewed, a half part of each of the two lifting and lowering members 12 is situated in the projection areas X of the lower station 2 and the upper station 3. In other words, a half part of the two lifting and lowering members 12 is situated in an overlapped area in which the projection area of the upper station and the projection area of the lower station are overlapped with each other. Nevertheless, the projection areas of the two lifting and lowering members 12 are not overlapped with each other.

According to the present embodiment, the geared motors 28a, 28b provided on each of the two lifting and lowering members 12 are electrically controlled. When one of the two lifting and lowering tables 8a, 8b is situated at the upper end, the placing table 13 protrudes towards the center of the lifting and lowering device 1, and is inserted to the upper station 3. When one of the two lifting and lowering tables 8a, 8b is situated at the lower end, the placing table 13 protrudes toward the center of the lifting and lowering device 1, and is inserted to the lower station 2.

When the two lifting and lowering tables 8a, 8b are situated at an intermediate height, the placing table 13 of each of the lifting and lowering tables 8a, 8b is drawn into the lifting and lowering member 12, so that the two lifting and lowering tables 8a, 8b can pass each other in a vertical direction.

The description is given in more details below.

Focusing on one of the lifting and lowering tables (lifting and lowering table on the right side) 8b, the guide engagement units (guide engagement members) 22a, 22b, 22c, 22d provided on either of the vertical pole members 18a, 18b that are respectively provided on the side walls 17a, 17b of the lifting and lowering member 12 are engaged with the pair of lifting and lowering guides 6b, 6d in back and front areas, as described above.

Accordingly, the lifting and lowering member 12 of the lifting and lowering table (lifting and lowering table on the right side) 8b is movable up and down along the lifting and lowering guides 6b, 6d. In other words, as the rotation of the geared motor 28 provided on the vertical pole member 18a causes the driving pinion 27 to rotate, and the driving pinion 27 cooperates with the rack 60 provided on the guide groove 10 of the lifting and lowering guide 6 to move up and down the lifting and lowering member 12.

As the lifting and lowering guides 6b, 6d are in a linear shape, each of the guide engagement units (guide engagement members) 22a, 22b, 22c, 22d has the degree of freedom only in a vertical direction, the lifting and lowering member 12 of the lifting and lowering table (lifting and lowering table on the right side) 8b moves up and down in the vertical direction (see FIGS. 9, 10, 11, and 15).

On the other hand, the engagement units 52a, 52b that are respectively engaged with the leading guides 7b, 7d move not only in a vertical direction, but in addition, their movement includes a horizontal component. In other words, since the leading guides 7b, 7d are curved, the engagement units 52a, 52b engaged with the leading guides 7b, 7d respectively make curved movements.

The two engagement units 52a, 52b are joined with each other by the shaft 53, and the shaft 53 penetrates the slits 30 that are respectively provided on the side walls 17a, 7b of the lifting and lowering member 12. Accordingly, the shaft 53 and the engagement units 52a, 52b on both ends thereof have a degree of freedom in a lateral direction with respect to the lifting and lowering member 12.

With this structure, while the lifting and lowering member 12 is guided by the lifting and lowering guides 6 and moves only in a vertical direction, the engagement units 52a, 52b protruding from both ends of the lifting and lowering member 12 move also in a lateral direction as shown in FIGS. 9, 10, 11, and 15.

When the engagement units 52a, 52b move in a lateral direction, the shaft 53 joining the engagement units 52a, 52b moves in a lateral direction with respect to the lifting and lowering member 12, thus the pinions 55a, 55b, which are rotation bodies mounted on the shaft 53, move in a lateral direction. The pinions 55a, 55b are respectively engaged with the lifting-and-lowering-table-racks 37a, 37b secured on the lifting and lowering member 12. Accordingly, when the pinions 55a, 55b move in a lateral direction, the pinions 55a, 55b are rotated in relation to the lifting-and-lowering-table-racks 37a, 37b.

On the other hand, the pinions 55a, 55b are also engaged with the placing-table-racks 41 a, 41b, respectively. Accordingly, when the pinions 55a, 55b are rotated, the placing-table-racks 41a, 41b are pressed in the axial direction. The placing table (laterally moving part) 13 on which the placing-table-racks 41 a, 41b are mounted, is movable in a horizontal direction with respect to the lifting and lowering member 12, and thus the placing-table-racks 41a, 41b move in a lateral direction.

The amount of movement of the placing-table-racks 41a, 41b is larger than the amount of lateral movement of the engagement units 52a, 52b. In other words, since the pinions 55a, 55b are respectively engaged with the placing-table-racks 41a, 41b, the placing-table-racks 41 a, 41b move in a lateral direction in an amount corresponding to the amount of the lateral movement of the pinions 55a, 55b.

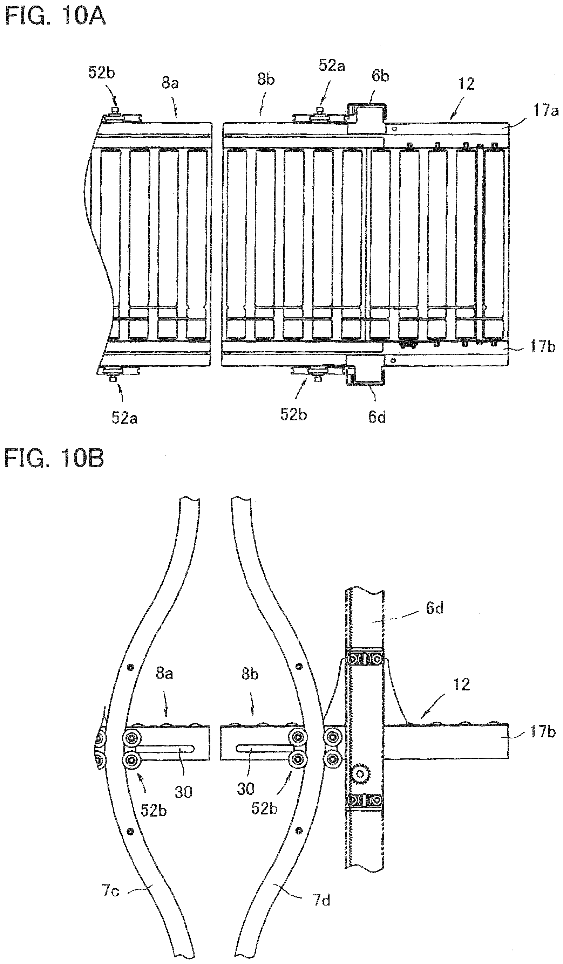

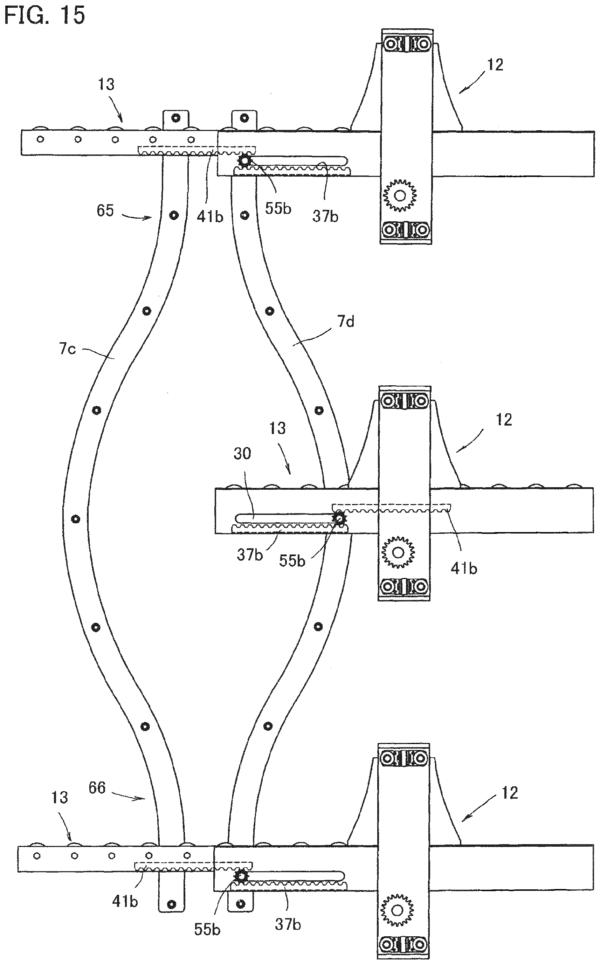

In addition, the placing-table-racks 41a, 41b move in association with the rotation of the pinions 55a, 55b. Since the amount of movement of the placing-table-racks 41a, 41b in association with the rotation of the pinions 55a, 55b is added to the above described amount of movement of the placing-table-racks 41 a, 41b, the placing-table-racks 41 a, 41b largely move in a lateral direction (see FIGS. 10 and 15). As a result, the placing table 13 largely moves in a lateral direction.

The embodiment is described together with the vertical movement of the lifting and lowering table (lifting and lowering table on the right side) 8b. When the geared motor 28 rotates, the lifting and lowering table (lifting and lowering table on the right side) 8b moves vertically as shown in FIGS. 9, 10, 11, 15.

Since the lifting and lowering member 12 of the lifting and lowering table (lifting and lowering table on the right side) 8b moves along the linear lifting and lowering guides 6b, 6d, the lifting and lowering member 12 moves only in a vertical direction. Even when the lifting and lowering table (lifting and lowering table right side) 8b is moved vertically, as shown in FIGS. 9, 10, 11, and 15, the lifting and lowering member 12 does not move in a lateral direction.

However, the vertical movement of the lifting and lowering member 12 causes the engagement positions between the engagement units 52a, 52b and the leading guides 7b,7d to shift in a vertical direction (see FIG. 15). The leading guides 7b, 7d are curved and each includes a curved passage 11 at the center part. Accordingly, when the lifting and lowering member 12 reaches the curved passage 11, the engagement units 52a, 52b moves in a lateral direction, and the pinions 55a, 55b rotate to largely move the placing table (laterally moving part) 13 in a lateral direction.

In other words, although the lifting and lowering member 12 moves only in a vertical direction, the placing table 13 provided on the lifting and lowering member 12 moves in a lateral direction according to the position (height) thereof.

More specifically, when the lifting and lowering table (lifting and lowering table on the right side) 8b is situated on the upper end as shown in FIGS. 9A and 9B, the engagement units 52a, 52b are engaged with the linear parts 65 on the upper end of the leading guides 7b, 7d, and the placing table 13 protrudes from the lifting and lowering member 12 toward the left side in the figure.

Here, the lifting and lowering guides 6b, 6d are located on the ends of the above described projection area X of the lifting and lowering device 1 (see FIG. 1), and are situated nearer to the ejection side (right side in the figure) in comparison with the center part of the lifting and lowering device 1. Accordingly, the lifting and lowering member 12 is situated at a position nearer to the ejection side (right side in the figure) in comparison with the center part of the lifting and lowering device 1, and moves in a vertical direction at the position. In other words, about a half part of the lifting and lowering member 12 is situated in the projection area X, and the remainder part thereof is situated at a position outside of the projection area X, and moves only in a vertical direction.

On the other hand, when the lifting and lowering table (lifting and lowering table on the right side) 8b is situated at the upper end as shown in FIGS. 9A and 9B, the placing table 13 protrudes from the lifting and lowering member 12 toward the left side in the figure, and the placing table 13 reaches the center part of the lifting and lowering device 1.

In other words, when the lifting and lowering table (lifting and lowering table on the right side) 8b is situated at the upper end as shown in FIGS. 9A and 9B, the placing table 13 protrudes toward the left side and reaches the center part of the lifting and lowering device 1. As a result, a large part of the placing table 13 is situated in the projection area X (see FIG. 1), and is situated at the upper station 3.

Note that when the lifting and lowering member 12 is situated on the upper end, the height thereof coincides with that of the upper linear horizontal conveyor 105. A part of the lifting and lowering member 12 is situated outside of the projection area X. Since a half area of the lifting and lowering member 12 is in the shape of a frame, only side walls 17a, 17b are provided, and an opening 42 is formed therebetween.

A distance between the side walls 17a, 17b is larger than the width of the linear horizontal conveyor 105, and thus the linear horizontal conveyor 105 is inserted into the frame of the lifting and lowering member 12 as shown in FIGS. 9A and 9B. Accordingly, the lifting and lowering member 12 and the linear horizontal conveyor 105 are not interfered with each other.

As shown in FIGS. 10A and 10B, when the lifting and lowering table (lifting and lowering table on the right side) 8b is situated at an intermediate height, the engagement units 52a, 52b are engaged with the curved passage 11 positioned at the center part of the leading guide 7, and the placing table 13 moves to the protruding side of the curved passage 11, and accommodates between the side walls 17a, 17b of the lifting and lowering member 12.

As described above, the lifting and lowering member 12 is situated nearer to the introduction side (right side in the figure) in comparison with the center part of the lifting and lowering device 1, and moves in a vertical direction at the position, and thus the placing table 13 is drawn into a position nearer to the introduction side (right side in the figure). In other words, a half part of the placing table 13 is situated outside of the projection area X.

The upper station 3 and the lower station 2 are mainly described below. When the lifting and lowering table (lifting and lowering table on the right side) 8b is situated at an intermediate height as shown in FIGS. 10A and 10B, the placing table 13 moves horizontally and a half part thereof goes outside of the projection area of the upper station 3 and the projection area of the lower station 2.

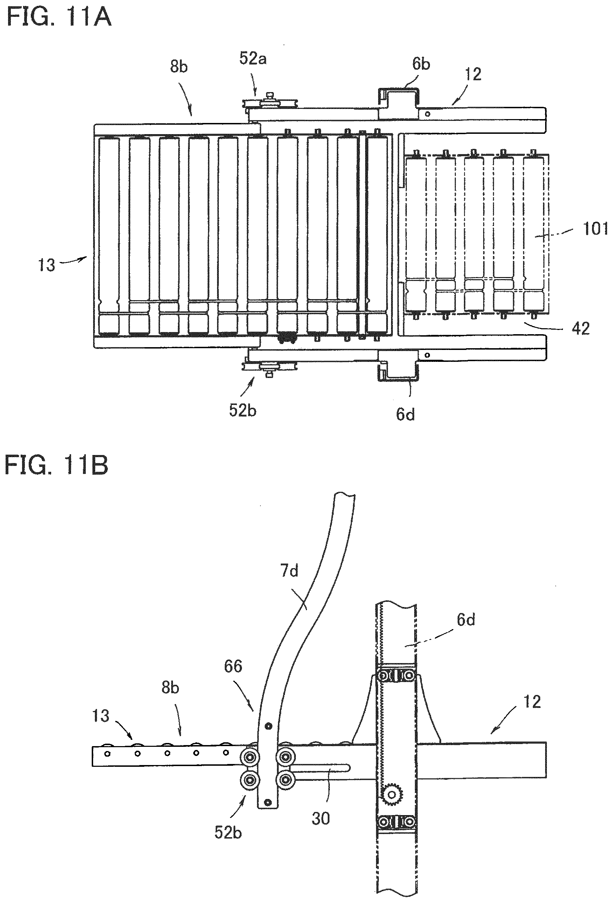

When the lifting and lowering table (lifting and lowering table on the right side) 8b is situated at the lower end as shown in FIGS. 11A and 11B, the engagement units 52a, 52b are engaged with the linear parts 66 at the lower end of the leading guides 7, and the placing table 13 protrudes from the lifting and lowering member 12 toward the left side in the figure.

In other words, when the lifting and lowering table (lifting and lowering table on the right side) 8b is situated at the lower part as shown in FIGS. 11A and 11B, the placing table 13 protrudes and reaches the center of the lifting and lowering device 1, and is inserted to the lower station 2. In this case as well, the linear horizontal conveyor 101 is inserted into the frame of the lifting and lowering member 12, and thus the lifting and lowering member 12 and the linear horizontal conveyor 101 are not interfered with each other.

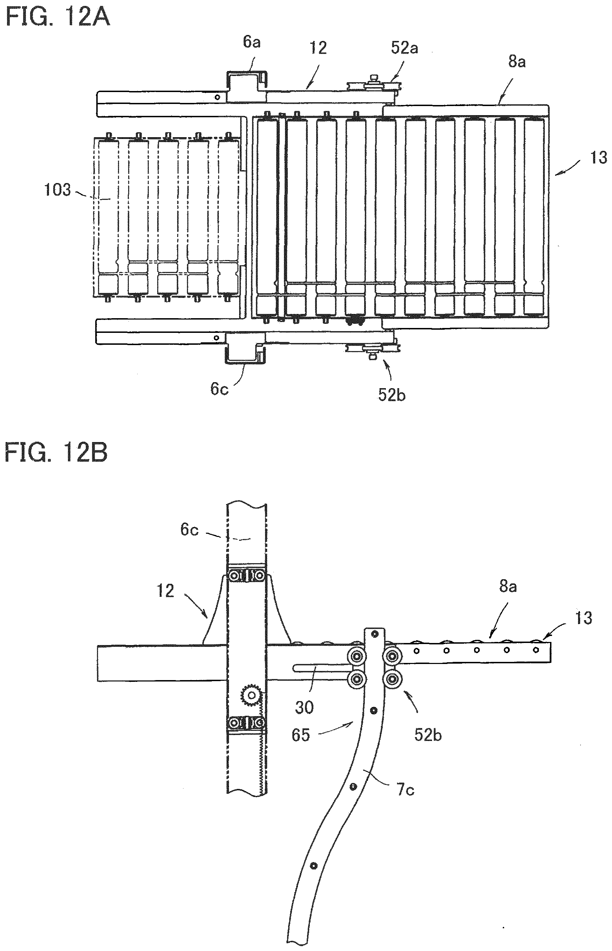

Although the operation of one of the lifting and lowering tables (lifting and lowering table on the right side) 8b is described, the same is applied to the other one of the lifting and lowering table (lifting and lowering table on the left side) 8a. Referring to FIGS. 12A and 12B, when the lifting and lowering table (lifting and lowering table on the left side) 8a is situated at the upper end (the upper station), the engagement units 52a, 52b are engaged with the linear parts 65 at the upper end of the leading guides 7a, 7c, and the placing table 13 protrudes from the lifting and lowering member 12 toward the right side in the figure.

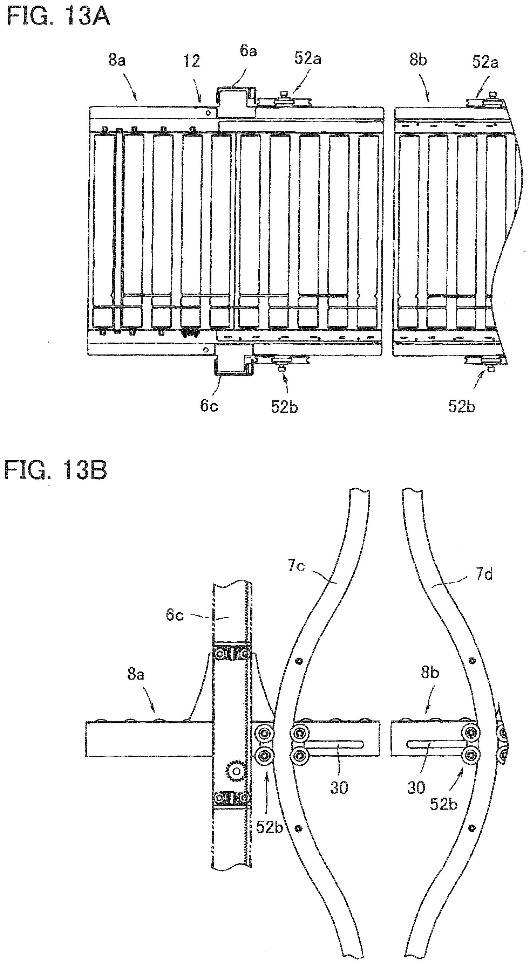

Referring to FIGS. 13A and 13B, when the lifting and lowering table (lifting and lowering table on the left side) 8a is situated at an intermediate height, the engagement units 52a, 52b are engaged with the curved passages 11 at the center part of the leading guide 7, and the placing table 13 moves to the protrusion side of the curved passage 11 and is accommodated in the lifting and lowering member 12.

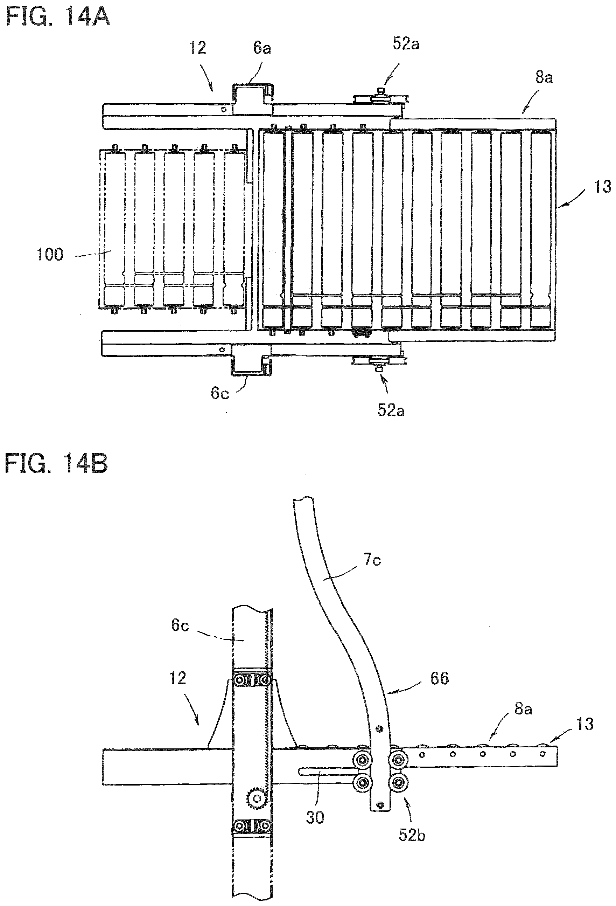

Referring to FIGS. 14A and 14B, when the lifting and lowering table (lifting and lowering table on the left side) 8a is situated at the lower end, the engagement units 52a, 52b are engaged with the linear part 66 at the lower part of the leading guides 7a, 7c, and the placing table 13 protrudes from the lifting and lowering member 12 toward the right side in the figure.

One of the lifting and lowering tables (lifting and lowering table on the left side) 8a and the other one of the lifting and lowering tables (lifting and lowering table on the right side) 8b are connected by wires, and are organized in such a manner that when one is situated at the upper end, the other is situated at the lower end, and when one is situated at an intermediate height, the other is also situated at an intermediate height.

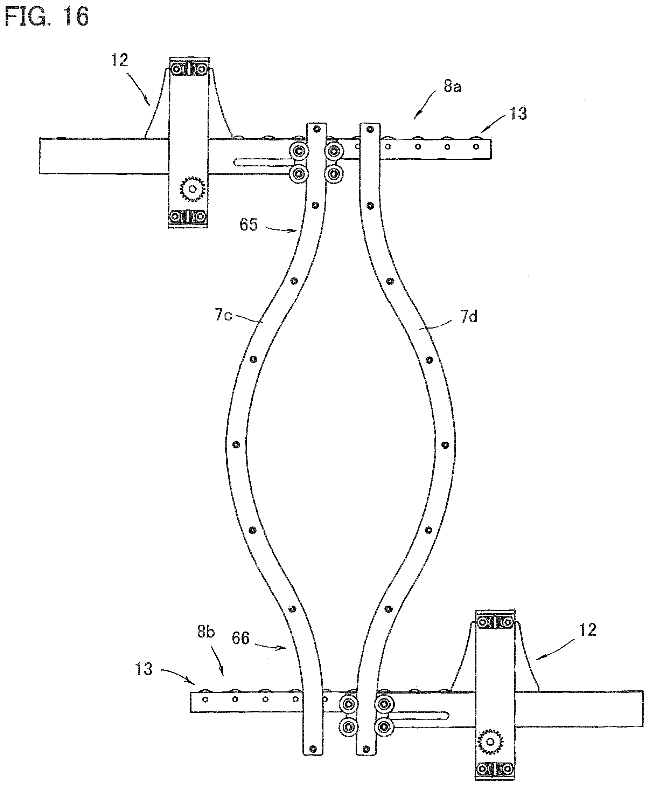

The organization is described with reference to FIGS. 16, 17, and 18. When one of the lifting and lowering tables (lifting and lowering table on the left side) 8a is situated at the upper end as shown in FIG. 16, the other one of the lifting and lowering tables (lifting and lowering table on the right side) 8b is situated at the lower end.

The placing table 13 of the upper one of the lifting and lowering tables (lifting and lowering table on the left side) 8a protrudes from the lifting and lowering member 12 toward the right side in the figure, and slides to the center of the lifting and lowering device 1 to be mostly inserted in the projection area X.

In other words, when the lifting and lowering table (lifting and lowering table on the left side) 8a is situated at the upper end, the placing table 13 thereof protrudes from the lifting and lowering member 12 toward the right side in the figure and is inserted to the upper station 3.

The other one of the lifting and lowering table (lifting and lowering table on the right side) 8b is situated at the lower end, the placing table 13 thereof protrudes from the lifting and lowering member 12 toward the left side in the figure, and slides to the center of the lifting and lowering device 1, as shown in FIG. 16. Then, a most part of the placing table 13 is inserted in the projection area X.

In other words, when the lifting and lowering table (lifting and lowering table on the right side) 8b is situated at the lower end, the placing table 13 protrudes from the lifting and lowering member 12 toward the left side in the figure and is mostly inserted in the projection area X. In other words, when the lifting and lowering table (lifting and lowering table on the right side) 8b is situated at the lower part, the placing table 13 thereof is inserted to the lower station 2.

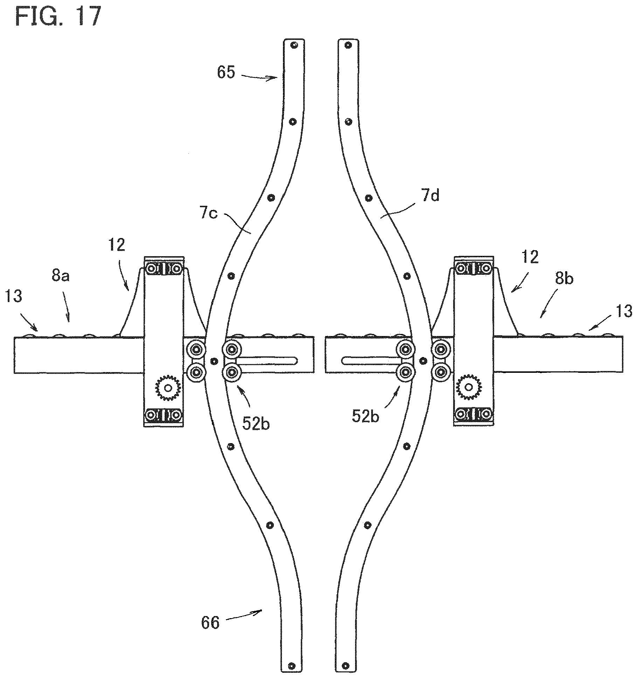

When the lifting and lowering table (lifting and lowering table on the left side) 8a is situated at an intermediate height as shown in FIG. 17, the other one of the lifting and lowering tables (lifting and lowering table on the right side) 8b is also situated at an intermediate height.

The engagement units 52a, 52b of the two lifting and lowering tables 8a, 8b are engaged with the curved passages 11 at an intermediate part of the leading guides 7, and each of the placing tables 13 moves to the protrusion side of the curved passages 11, and is accommodated in the lifting and lowering member 12.

Here, the lifting and lowering member 12 of one of the lifting and lowering tables (lifting and lowering table on the left side) 8a moves vertically in the introduction area A of the lifting and lowering device 1, and the lifting and lowering member 12 of the other one of the lifting and lowering table (lifting and lowering table on the right side) 8b moves vertically in the ejection area B of the lifting and lowering device 1.

Accordingly, the two lifting and lowering tables 8a, 8b pass each other without collision as shown in FIG. 17.

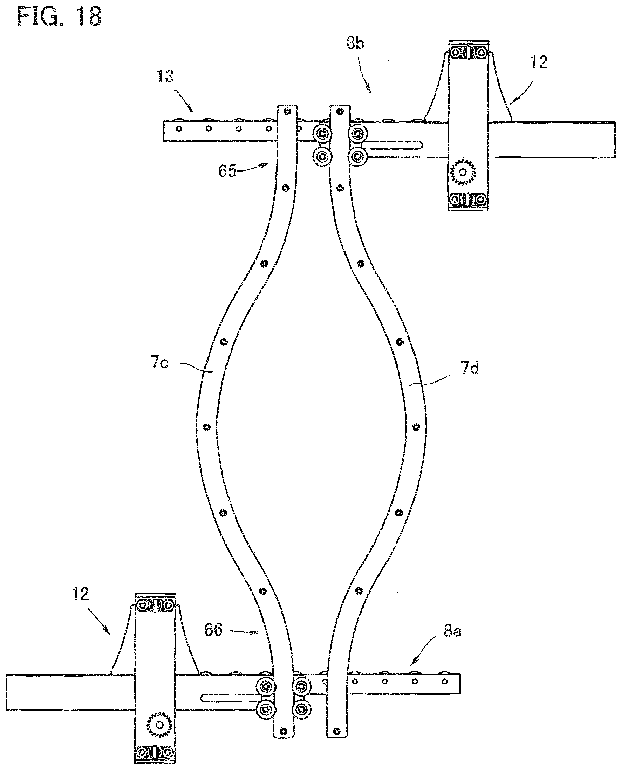

Referring to FIG. 18, when one of the lifting and lowering tables (lifting and lowering table on the left side) 8a is situated at the lower end, the other one of the lifting and lowering tables (lifting and lowering table on the right side) 8b is situated at the upper end.

Then, the placing table 13 of the lifting and lowering table (lifting and lowering table on the left side) 8a protrudes from the lifting and lowering member 12 toward the right side in the figure, and is mostly inserted in the projection area X of the lifting and lowering device 1. In other words, when the lifting and lowering table (lifting and lowering table on the left side) 8a is situated at the lower end, the placing table 13 is inserted to the lower station 2.

The placing table 13 of the other one of the lifting and lowering table (lifting and lowering table on the right side) 8a also protrudes from the lifting and lowering member 12 to the left side in the figure, and slides to the center of the lifting and lowering device 1 to enter the upper station 3.

As described above, the lifting and lowering device 1 according to the present embodiment, when either one of the lifting and lowering tables 8 is situated at the upper end, the placing table 13 protrudes from the lifting and lowering member 12 to the central side of the lifting and lowering device 1 to enter the upper station 3.

At the same time, the other one of the lifting and lowering tables 8 is situated at the lower end, and the placing table 13 thereof protrudes from the lifting and lowering member 12 toward the central side of the lifting and lowering device 1 to enter the lower station 2.

Accordingly, an object can be conveyed into one station, while another object can be conveyed from the other station.

According to the present embodiment, while an object is ejected from the upper station 3 to the linear horizontal conveyor 105, the other lifting and lowering table 8 stays at the lower station 2. Accordingly, a new object can be conveyed to the lower station 2. Alternatively, the motor-incorporating roller 50 of the placing table 13 is rotated at the lower station 2 to pass an object. In other words, an object can be conveyed from the conveyor 100 to the downstream conveyor 101 by allowing the placing table 13 to function as a conveyor.

In view of the above, the lifting and lowering device 1 of the present embodiment has high conveyance efficiency

The floor area occupied by the lifting and lowering device 1 is small. Accordingly, the lifting and lowering device 1 excels in space saving.

According to the above embodiment, the leading guides 7a, 7b, 7c, 7d are symmetrical or identical in shape, and thus the moving amounts of the two placing tables 13 are equal to each other. However, the present invention is not limited to this structure, and may employ a structure in which the shapes of the leading guides 7a, 7b, 7c, 7d are different from each other, or only one of the placing table moves in a lateral direction.

In other words, when the two placing tables 13 move in a vertical direction, one of the placing table 13 may entirely move out of the projection area X at an intermediate height between the upper station and the lower station, and the two placing tables 13 pass each other.

According to the above embodiments, the pinions 55a, 55b are employed as rotation bodies that freely rotate, but friction wheels or sprockets may also be employed instead of the pinions.

According to the above embodiments, two lifting and lowering guides 6 are provided with respect to one lifting and lowering table 8, and the lifting and lowering table 8 moves up and down along the two lifting and lowering guides 6. In addition, the vertical pole members 18a, 18b are provided to resist the moment applied with respect to the lifting and lowering table 8, and the guide engagement units (guide engagement members) 22 are arranged at positions vertically apart from each other. This structure enables downsizing of the lifting and lowering device 1. However, the present invention is not limited to this structure, and the number of the lifting and lowering guide 6 may be increased to support the lifting and lowering table 8.

According to the above embodiments, a combination of the pinions 55a, 55b, the placing-table-racks 41a, 41b, and the lifting-and-lowering-table-racks 37a, 37b forms a moving amount amplifying mechanism, thus the moving amount of the follower member 32 in a horizontal direction is amplified to move the placing table 13 in a lateral direction.

However, the present invention is not limited to this structure, and the moving amount amplifying mechanism may be omitted.

### EXPLANATION OF REFERENCE SIGNS

- 1: lifting and lowering device
- 2: lower station
- 3: upper station
- 6a, 6b, 6c, 6d: lifting and lowering guide
- 7a, 7b, 7c, 7d: leading guide
- 8a, 8b: lifting and lowering table
- 11c, 11d: curved passage
- 12: lifting and lowering member
- 13: placing table
- 18a, 18b: vertical pole member
- 20a, 20b: guide rail
- 22a, 22b, 22c, 22d: guide engagement unit (guide engagement member)
- 25a, 25b: lateral guide short roller
- 28a, 28b: geared motor
- 27: driving pinion
- 30a, 30b: slit
- 32: follower member
- 33a, 33b: short roller
- 37a, 37b: lifting-and-lowering-table-rack
- 38a, 38b: short roller
- 40a, 40b: guide rail
- 41a,41b: placing-table-rack
- 52a, 52b: engagement unit
- 53: shaft
- 55a, 55b: pinion

## Claims

1. A lifting and lowering device comprising:
- a lower station;
- an upper station situated above the lower station; and
- two placing tables moving vertically between the upper station and the lower station,
wherein a projection area of the upper station and a projection area of the lower station partly or entirely overlap with each other, and
wherein when the two placing tables vertically move, the placing tables partly or entirely move out of the projection areas at an intermediate height position between the upper station and the lower station to allow the two placing tables to pass each other at the position.

2. The lifting and lowering device according to claim 1,
further comprising:
- a leading guide member provided in a vertical direction, the leading guide member having a curved passage at an intermediate part; and
- a follower member engaged with the leading guide member,
wherein movement of the follower member along the curved passage allows the placing table to move in a lateral direction.

3. The lifting and lowering device according to claim 2,
comprising a lifting and lowering member movable in a vertical direction,
wherein the placing table is set in the lifting and lowering member, the placing table being movable in a lateral direction with respect to the lifting and lowering member,
wherein the follower member comprises a freely rotatable rotation body,
wherein the lifting and lowering member and the placing table each comprise a engagement member engaging with the rotation body, and
wherein the rotation body moves laterally while the follower member moves along the curved passage of the leading guide member,
the rotation body being rotated due to its engagement with the engagement member on the lifting and lowering member,
rotation of the rotation body causing the engagement member on the placing table to move laterally to allow the placing table to move laterally.

4. The lifting and lowering device according to any one of claims 1 to 3, comprising:
- a lifting and lowering member movable in a vertical direction; and
- a lifting and lowering guide member provided in a vertical direction,
wherein the placing table is set in the lifting and lowering member, the placing table being movable in a lateral direction with respect to the lifting and lowering member, and
wherein the lifting and lowering member comprises a vertical pole member having a plurality of guide engagement members at different positions in height,
the guide engagement member being engaged with the lifting and lowering guide member.

5. The lifting and lowering device according to any one of claims 1 to 4, comprising a lifting and lowering member movable in a vertical direction,
wherein the placing table is set in the lifting and lowering member,
wherein the lifting and lowering member comprises a driving source and a rotation body rotated by the driving source,
wherein a fixed engagement part engaged with the rotation body and extending in a vertical direction is provided, the fixed engagement part being fixed to a portion other than the lifting and lowering member, and
wherein rotation of the rotation body causes the lifting and lowering member to move vertically.

6. The lifting and lowering device according to any one of claims 1 to 5,
comprising a lifting and lowering member movable in a vertical direction, the lifting and lowering member including a pair of side walls that move vertically holding a substantially horizontal attitude,
wherein the placing table includes an area for placing an object, the placing table configured to take either of a state in which 70 % or more of the area for placing an object is accommodated in an area surrounded by the pair of side walls, and a state in which the area for placing an object largely protrudes from the area surrounded by the pair of side walls.

7. The lifting and lowering device according to any one of claims 1 to 6,
comprising two lifting and lowering members movable in a vertical direction,
wherein each of the two placing tables is set in one of the two lifting and lowering members, the two placing tables being movable in a protruding direction and in a lateral direction with respect to the lifting and lowering members,
wherein the two lifting and lowering members are situated in such a manner that each of the lifting and lowering members partly is located in an overlapping area where the projection area of the upper station and the projection area of the lower station overlap with each other, whereas projection domains of the two lifting and lowering members do not overlap with each other, and
wherein the two lifting and lowering members move in a vertical direction to allow each of the placing tables to be drawn in a lifting and lowering table at an intermediate height position and to allow the placing tables to protrude with respect to the lifting and lowering members at either of the upper station and the lower station.

8. The lifting and lowering device according to any one of claims 1 to 7, comprising a lifting and lowering member movable in a vertical direction,
wherein the placing table is set in the lifting and lowering member, the placing table being movable in a lateral direction with respect to the lifting and lowering members,
wherein the lifting and lowering member comprises a pair of side walls that move vertically holding a substantially horizontal attitude, and
wherein when a lifting and lowering table is situated at the upper station or the lower station and an external conveyor is provided in a part of an area surrounded by the pair of side walls, the placing table leaves the area in which the conveyor is provided.

9. The lifting and lowering device according to any one of claims 1 to 8, comprising:
- a pair of leading guide members that are vertically provided on a plane;
- a pair of lifting and lowering guide members that are provided outside of the leading guide members; and
- two lifting and lowering members linearly movable in a vertical direction along either one of the lifting and lowering guide members,
wherein the placing tables receive force from the leading guide members to move in a lateral direction.

10. The lifting and lowering device according to any one of claims 1 to 9,
wherein the placing tables are electrically and/or mechanically controlled in such a manner that when one of the placing tables is situated at the upper station or the lower station, the other of the placing tables is situated at the lower station, and when one of the placing tables is situated between the upper station and the lower station, the other of the placing tables is also situated between the upper station and the lower station.

11. The lifting and lowering device according to any one of claims 1 to 10, comprising:
- a leading guide member vertically provided and having a horizontal component;
- a follower member engaged with the leading guide member; and
- a moving amount amplifying mechanism that moves the placing table in a lateral direction at the amplified moving amounts from the moving amounts of the follower member.

12. The lifting and lowering device according to any one of claims 1 to 11,
wherein when the placing tables vertically move, the placing tables partly move out of the projection areas at a position where the height of the placing tables coincide with each other, to allow the placing tables to pass each other by temporarily moving away from the overlapping area where the projection area of the upper station and the projection area of the lower station overlap with each other.

13. The lifting and lowering device according to any one of claims 1 to 11,
wherein when the placing tables vertically move, one of the placing tables entirely leaves the projection areas at an intermediate height position between the upper station and the lower station to allow the two placing tables to pass each other.
